# EUROPEAN PATENT APPLICATION

(11) **EP 3 643 659 A1**
(43) Date of publication of application: **29.04.2020**
(21) Application number: 18202849.8
(22) Date of filing: 26.10.2018
(51) Int. Cl.: B66B 1/34, H04B 10/00

(54) **ELEVATOR SYSTEM**

(71) Applicant: Otis Elevator Company, Farmington, Connecticut 06032 (US)
(72) Inventor: The designation of the inventor has not yet been filed
(74) Representative: Schmitt-Nilson Schraud Waibel Wohlfrom Patentanwälte Partnerschaft mbB

(57) **Abstract**

An elevator system (2) comprises at least one elevator car (10) configured for traveling within a hoistway (4) between a plurality of landings (10); and an optical data transmission system configured for optically transmitting data between a stationary device (20b) and a mobile device (20a) located at the at least one elevator car (10). The optical data transmission system comprises at least one emitter (34a, 34b) assigned to any of the stationary device (20b) and the mobile device (20a); and at least one receiver (32b, 32a) assigned to the other one of the stationary device (20b) and the mobile device (20a). The at least one emitter (34a, 34b) comprises at least one source of radiation (36a, 36b) configured for emitting a beam of radiation (30a, 30b) towards the at least one receiver (32b, 32a). The at least one receiver (32b, 32a) comprises at least one detector (38b, 38a) configured for detecting the beam of radiation (30a, 30b) emitted by the at least one emitter (34a, 34b), and a diffuser (40b, 40a) arranged at the side of the at least one detector (38b, 38a) facing the at least one emitter (34a, 34b) and being configured for diffusing the beam of radiation (30a, 30b) emitted by the at least one emitter (34a, 34b) before it reaches the at least one detector (38b, 38ba).

## Description

The invention relates to an elevator system comprising at least one elevator car traveling within a hoistway. The invention in particular relates to an elevator system comprising an optical data transmission system which is configured for optically transmitting data from and/or to the at least one elevator car.

An elevator system typically comprises at least one elevator car moving along a hoistway between a plurality of landings, and a driving system including a drive unit configured for driving the elevator car.

There is a desire for transmitting data from and/or to the at least one elevator car. The transmitted data may include control data for controlling the elevator system. In addition, the data transmission from and/or to the elevator car may be used for providing access to the Internet from the interior of the at least one elevator car.

A wired data connection between the elevator car and a stationary counterpart is cumbersome and expensive, in particular in case of long hoistways as they are present in high buildings. Further, the transmission range of known wireless data transmission technologies is limited. Repeaters may be used for increasing the transmission range. The use of repeaters, however, results in more cumbersome and expensive installation and maintenance.

In consequence, there is a desire for an improved data transmission system which allows reliably transmitting data with a large bandwidth between an elevator car and a stationary counterpart, in particular transmitting data over large distances and at comparatively low costs.

According to an exemplary embodiment of the invention, an elevator system comprises at least one elevator car configured for traveling within a hoistway between a plurality of landings, and an optical data transmission system configured for optically transmitting data between a stationary device and a mobile device provided at the at least one elevator car. The optical data transmission system comprises at least one emitter and at least one receiver. The at least one emitter is assigned to any of the stationary device and the mobile device, and the at least one receiver is assigned to the other one of the stationary device or the mobile device. The at least one emitter includes at least one source of radiation configured for emitting a beam of radiation towards the at least one receiver. The at least one source of radiation in particular may be a light source configured for emitting a light beam. The at least one receiver comprises at least one detector, in particular a light detector, which is configured for detecting radiation, in particular radiation from the beam of radiation emitted by the at least one emitter. The at least one receiver further comprises a diffuser arranged on the side of the detector facing the at least one emitter. The diffuser is configured for diffusing the beam of radiation emitted by the emitter so that the radiation of the beam of radiation reaches the at least one detector as diffused radiation distributed over an enlarged area.

According to exemplary embodiments of the invention, the diffuser diffuses the radiation of the beam of radiation reaching the at least one receiver over an enlarged area, thereby generating a spot of radiation having a diameter which is larger than the diameter of the non-diffused beam of radiation. Thus, the radiation of the beam of radiation is distributed over an enlarged area. In consequence, the chances that the radiation is detected by the at least one detector is considerably increased, in particular in case the mobile device is misaligned with respect to the stationary device, e.g. due to movements of the elevator car.

As a result, with an optical data transmission system according to an exemplary embodiment of the invention, data can be transmitted reliably over long distances between the mobile device mounted to the elevator car and the stationary device. The data may be transmitted with a large bandwidth, and an optical data transmission system according to an exemplary embodiment of the invention may be implemented in an elevator system at lower costs than existing wire-bound or wireless data transmission systems.

A number of optional features are set out in the following. These features may be realized in particular embodiments, alone or in combination with any of the other features.

The radiation may include visible light and/or infrared light, in particular near infrared light. Visible light and/or infrared light, in particular near infrared light, is well suited for the desired purpose of data transmission and may be diffused using ordinary diffusers, which are available at low costs. The radiation may also include radio waves and/or microwaves.

The source of radiation may be a laser light source emitting a laser light beam. A laser light beam allows transmitting data optically without focusing the beam of radiation. Thus, no additional optics, which would increase the costs of the system, are needed. A laser light beam barely diverges along its length. It therefore allows for reliable data transmission over large distances.

The diffusers may comprise frosted glass, which is also known as translucent glass or opaque glass, for diffusing the beam of radiation.

The diffusers also may comprise a suitable combination of rough and/or half-reflecting surfaces arranged in a configuration diffusing an incoming beam of radiation.

The at least one receiver may comprise a plurality of detectors. The plurality of detectors in particular may form an array of detectors. Providing a plurality of detectors, in particular providing an array of detectors, increases the chances that the beam of radiation hits at least one of the plurality of detectors. It therefore enhances the reliability of the optical data transmission, in particular when the elevator car is tilted and/or moved within a horizontal direction.

While the non-diffused beam of radiation, in particular a laser light beam, may have a cross-sectional area of 1mm² to 3mm², in particular a cross-sectional area of not more than 2mm², the diffuser may be configured for diffusing the beam of radiation into a spot of radiation having a diameter of 10 cm to 30 cm. This considerably enhances the chances that at least a portion of the beam of radiation is detected by at least one of the detectors, in particular in case gaps are present between adjacent detectors.

The at least one emitter may be movably supported in order to allow orienting the beam of radiation in a vertical direction even in case the elevator car is tilted. The emitter in particular may be supported by a cardanic suspension. A cardanic suspension allows freely orienting the at least one emitter in space for directing the at least one beam of radiation into a desired direction irrespective of the current orientation of the elevator car.

The at least one emitter may include or may be connected with a weight configured for orienting the beam of radiation in a vertical direction by means of gravitational forces acting onto the weight.

Alternatively or additionally, the emitter may be supported by actuators configured for adjusting the spatial orientation of the at least one emitter. The actuators may be piezo-actuators allowing for a fast adjustment of the spatial orientation of the at least one emitter.

The elevator system may further comprise a controller configured for controlling the actuators in order to adjust the spatial orientation of the at least one emitter. The controller in particular may be configured for adjusting the spatial orientation of the at least one emitter based on control signals provided by the receiver. The control signals may be transferred from the receiver to the emitter via an optical data transmission.

The optical data transmission system may be configured for bi-directional data transmission. In order to allow bi-directional data transmission, the optical data transmission system may comprise a stationary emitter, a stationary receiver, a mobile emitter, and a mobile receiver. The stationary emitter may be part of the stationary device, and the mobile receiver may be part of the mobile device. The mobile receiver may be configured for detecting a beam of radiation emitted by the stationary emitter. The mobile emitter may be part of the mobile device, and the stationary receiver may be part of the stationary device. The stationary receiver may be configured for detecting a beam of radiation emitted by the mobile emitter.

Such a configuration allows transmitting data from the stationary device to the mobile device attached to the elevator car, as well as transmitting data in the opposite direction, i.e. from the mobile device attached to the elevator car to the stationary device.

For providing access to the Internet from inside the elevator car, the stationary device may be connected to the Internet, e.g. by means of an appropriate gateway / router. The mobile device may comprise or may be connected with a wireless local area network access point (WLAN access point) in order to provide smartphones and/or other electronic devices of passengers within the elevator car access to the Internet via the optical data transmission system.

In the following, an exemplary embodiment of the invention is described in more detail with reference to the enclosed figures.
Figure 1 depicts an elevator system comprising an optical data transmission system according to an exemplary embodiment of the invention.
Figure 2 depicts an enlarged view of the elevator car and an upper section of a hoistway of the elevator system depicted in Figure 1.
Figure 3 depicts an enlarged sectional side view of a mobile device of an optical data transmission system according to an exemplary embodiment of the invention.
Figure 4 depicts a top view of the mobile device depicted in Figure 3.
Figure 5 depicts an enlarged sectional side view of a stationary device of an optical data transmission system according to an exemplary embodiment of the invention.
Figure 6 depicts a top view of the stationary device depicted in Figure 5.

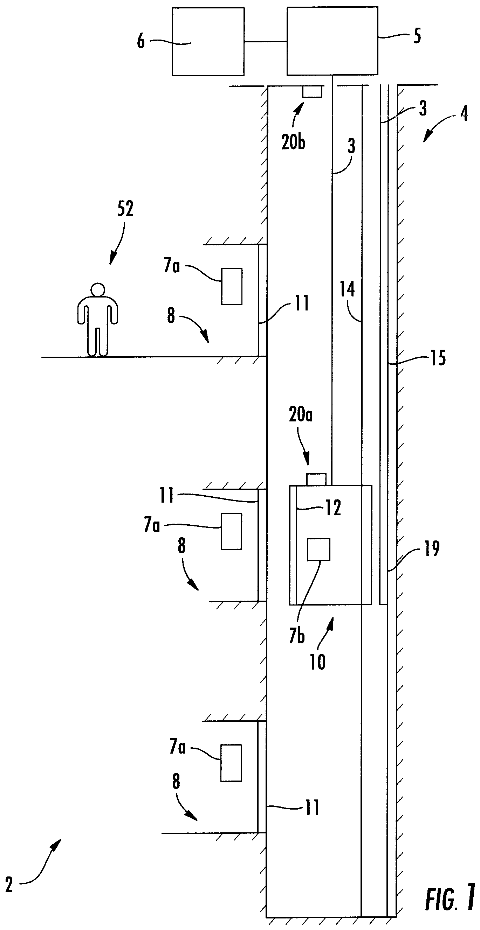

Figure 1 schematically depicts an elevator system 2 comprising an optical data transmission system according to an exemplary embodiment of the invention.

The elevator system 2 includes an elevator car 10 movably arranged within a hoistway 4 extending from a bottom 4a of the hoistway 4 to a top 4b of the hoistway 4 between a plurality of landings 8. The elevator car 10 in particular is movable along a plurality of car guide members 14, such as guide rails, extending along the vertical direction of the hoistway 4. Only one of said car guide members 14 is depicted in Figure 1.

Although only one elevator car 10 is depicted in Figure 1, the skilled person will understand that exemplary embodiments of the invention may include elevator systems 2 having a plurality of elevator cars 10 moving in one or more hoistways 4.

The elevator car 10 is movably suspended by means of a tension member 3. The tension member 3, for example a rope or belt, is connected to a drive unit 5, which is configured for driving the tension member 3 in order to move the elevator car 10 along the height of the hoistway 4 between the plurality of landings 8, which are located on different floors.

Each landing 8 is provided with a landing door 11, and the elevator car 6 is provided with a corresponding elevator car door 12 for allowing passengers 52 to transfer between a landing 8 and the interior of the elevator car 6 when the elevator car 10 is positioned at the respective landing 8.

The exemplary embodiment shown in Figure 1 uses a 1:1 roping for suspending the elevator car 10. The skilled person, however, easily understands that the type of the roping is not essential for the invention and that different kinds of roping, e.g. a 2:1 roping or a 4:1 roping may be used as well.

The elevator system 2 includes further a counterweight 19 attached to the tension member 3 opposite to the elevator car 10 and moving concurrently and in opposite direction with respect to the elevator car 10 along at least one counterweight guide member 15. The skilled person will understand that the invention may be applied to elevator systems 2 which do not comprise a counterweight 19 as well.

The tension member 3 may be a rope, e.g. a steel core, or a belt. The tension member 3 may be uncoated or may have a coating, e.g. in the form of a polymer jacket. In a particular embodiment, the tension member 3 may be a belt comprising a plurality of polymer coated steel cords (not shown). The elevator system 2 may have a traction drive including a traction sheave for driving the tension member 3.

In an alternative configuration, which is not shown in the figures, the elevator system 2 may be an elevator system 2 without a tension member 3, comprising e.g. a hydraulic drive or a linear drive. The elevator system 2 may have a machine room (not shown) or may be a machine room-less elevator system.

The drive unit 5 is controlled by an elevator control 6 for moving the elevator car 10 along the hoistway 4 between the different landings 8.

Input to the elevator control 6 may be provided via landing control panels 7a, which are provided on each landing 8 close to the landing doors 11, and/or via an elevator car control panel 7b, which is provided inside the elevator car 10.

The landing control panels 7a and the elevator car control panel 7b may be connected to the elevator control 6 by means of electrical wires, which are not depicted in Figure 1, in particular by an electric bus, or by means of wireless data connections.

The elevator system 2 further comprising an optical data transmission system which is configured for optically transmitting data from and/or to the elevator car 6.

The optical data transmission system comprises a stationary device 20b arranged at the top 4b of the hoistway 4, and a mobile device 20a mounted to the elevator car 10. In an alternative configuration, which is not depicted in the figures, the stationary device 20b may be arranged at the bottom 4a of the hoistway 4 configured for communicating with a mobile device 20a attached to the bottom of the elevator car 10.

In yet another configuration, a mobile device 20a may be attached to a side wall 9 of the elevator car 10. Depending on its orientation, a mobile device 20a attached to a side wall 9 of the elevator car 10 may communicate with a stationary device 20b located at the top 4b of the hoistway 4 or with a stationary device 20b located at the bottom 4a of the hoistway 4.

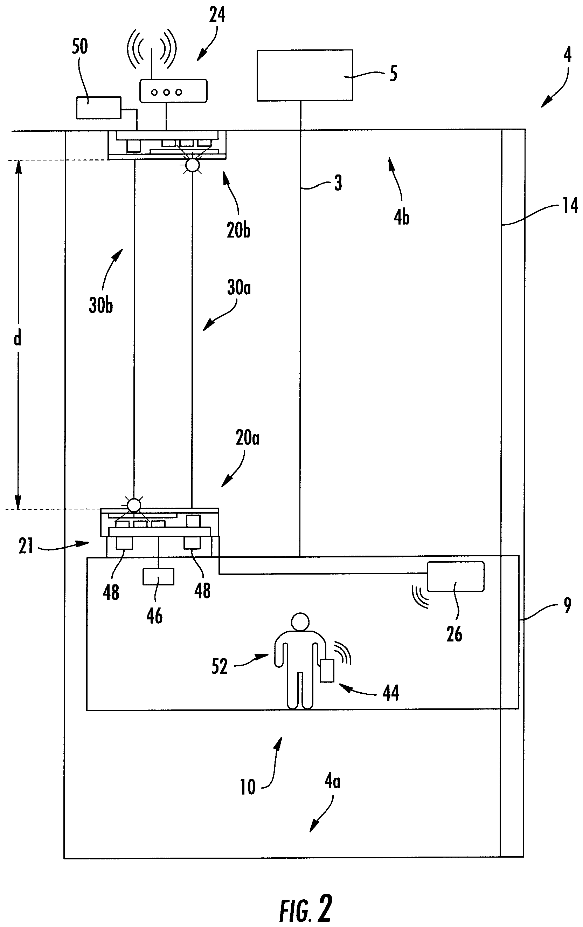

Figure 2 depicts an enlarged view of the elevator car 10 and an upper section of the hoistway 4. For clarity of illustration, the counterweight 19, the elevator car door 12 and the landing doors 11 are not depicted in Figure 2.

The stationary device 20b arranged at the top of the hoistway 4 is connected with a gateway or router 24, which is connected to the Internet via a wired or wireless data connection.

The mobile device 20a mounted to the elevator car 10 is connected with a WLAN access point 26 which is configured for providing a wireless local area network within the elevator car 10. In another configuration, which is not shown in the figures, the mobile device 20a may be formed integrally with the WLAN access point 26.

A WLAN access point 26 connected to the mobile device 20a allows smartphones and/or other electronic devices 44 of passengers 52 within the elevator car 10 to access the Internet via the optical data transmission system.

Two beams of radiation 30a, 30b, such as light beams, extend between the stationary device 20b and the mobile device 20a. The beams of radiation 30a, 30b allow transmitting data between the stationary device 20b and the mobile device 20a, as will be described in more detail in the following.

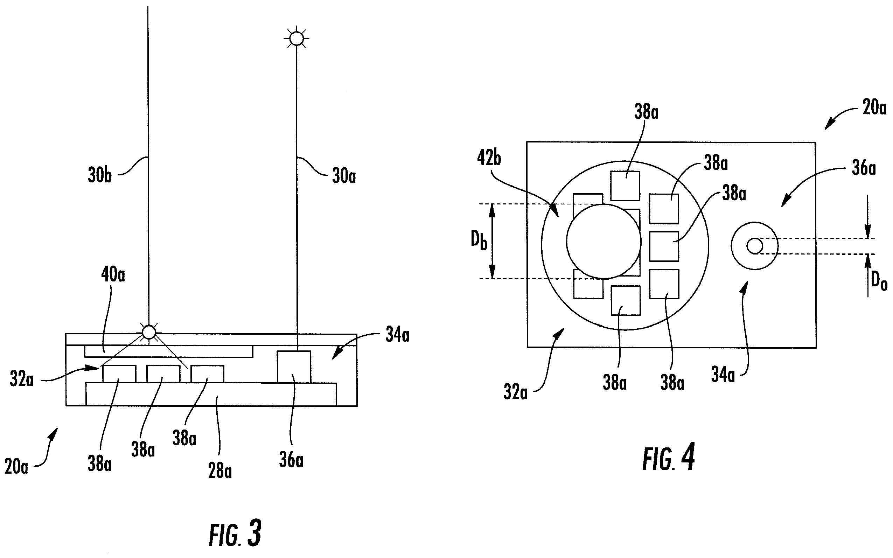

Figure 3 depicts an enlarged sectional side view of the mobile device 20a, and Figure 4 depicts a top view thereof.

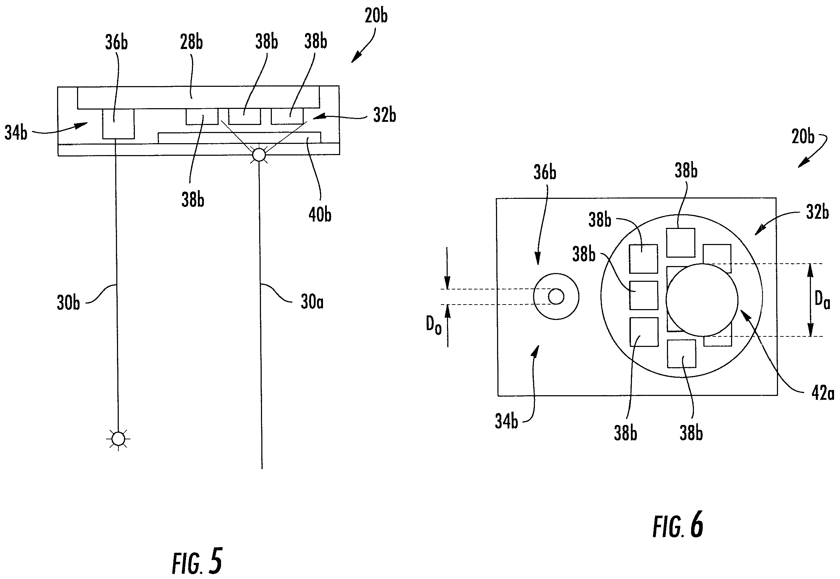

Figure 5 depicts an enlarged sectional side view of the stationary device 20b, and Figure 6 depicts a bottom view thereof.

The stationary device 20b is formed similar to the mobile device 20a but installed in an upside down orientation with respect to the mobile device 20a.

The mobile device 20a includes a mobile receiver 32a depicted on the left side of Figures 3 and 4, and a mobile emitter 34a depicted on the right side of Figures 3 and 4.

The stationary device 20b includes a stationary receiver 32b depicted on the right side of Figure 5 and a stationary emitter 34b depicted on the left side of Figures 5 and 6.

In each device 20a, 20b, the receiver 32a, 32b and the emitter 34a, 34b may be formed on the same (printed) circuit board 28a, 28b as shown in Figures 3 and 5. In an alternative configuration, which is not shown in the figures, the receiver 32a, 32b and the emitter 34a, 34b may be formed on separate circuit boards.

Each emitter 34a, 34b comprises at least one source of radiation 36a, 36b, in particular a light source, configured for emitting a beam of radiation 30a, 30b ("light beam"). The mobile emitter 34a comprises at least one mobile source of radiation 36a, and the stationary emitter 34b comprises at least one stationary source of radiation 36b. The at least one source of radiation 36a, 36b may be a laser diode configured for emitting a laser light beam. The at least one source of radiation 36a, 36b in particular may be configured for emitting visible light and/or infrared light.

The mobile device 20a is arranged so that the beam of radiation 30a emitted by the mobile emitter 34a is emitted in a substantially vertical direction towards the upper end of the hoistway 4, in particular towards the stationary device 20b provided at the upper end of the hoistway 4 (see Figure 2).

The stationary device 20b is arranged so that the beam of radiation 30b emitted by the stationary emitter 34b is emitted in a substantially vertical direction towards elevator car 10, in particular towards the mobile device 20a mounted to the top of the elevator car 10 (see Figure 2).

Each receiver 32a, 32b comprises at least one detector 38a, 38b, in particular a plurality of detectors 38a, 38b, configured for detecting the radiation emitted by one of the emitters 34a, 34b. Although only ten detectors 38a, 38b are depicted in Figures 4 and 6, one hundred or even more detectors 38a, 38b may be arranged in an array having a basically circular periphery and a diameter of approximately 10 cm.

The stationary device 20b and the mobile device 20a are arranged and oriented in a configuration in which the beam of radiation 30a emitted by the mobile emitter 34a of the mobile device 20a hits at least one of the stationary detectors 38b of the stationary device 20b, and the beam of radiation 30b emitted by the stationary emitter 34b of the stationary device 20b hits at least one of the mobile detectors 38a of the mobile device 20a, as it is shown in Figure 2.

By modulating the intensities of the beams of radiation 30a, 30b and detecting the intensities of the modulated beams of radiation 30a, 30b, data may be transferred between the stationary device 20b and the mobile device 20a. Appropriate beams of radiation 30a, 30b, such as laser light beams, allow transferring data over large distances of up to 1000 m.

There, however, is some risk, that due to movements, such as vibrations, of the elevator car 10 in a direction transverse to the vertical direction, in particular movements in a horizontal direction, at least one of the beams of radiation 30a, 30b at least temporarily does not reach any of the corresponding detectors 38a, 38b, resulting in an undesirable interruption of the data transmission.

In order to prevent such an undesirable interruption of the data transmission, a diffuser 40a, 40b (see Figs. 3 and 5) is arranged in front of each of the detectors 38a, 38b, respectively. The diffusers 40a, 40b are in particular arranged on the side of the respective detector 38a, 38b facing the corresponding emitter 34b, 34a, i.e. between the respective detector 38a, 38b and the corresponding emitter 34b, 34a.

The diffusers 40a, 40b are configured for diffusing, i.e. widening, the beams of radiation 30b, 30a before they reach the detectors 38a, 38b. In other words, the diameters D_{b}, Dₐ of the spots of radiation 42b, 42a generated by each of the beams of radiation 30b, 30a are increased. As a result, each of the spots of radiation 42b, 42a covers an enlarged area, in particular an area which is larger than the area of each of the detectors 38a, 38b.

In consequence, each beam of radiation 30b, 30a is detected by at least one of the photo detectors 38a, 38b, even in case the spot of radiation 42b, 42a of the respective beam of radiation 30b, 30a moves within the area covered by the photo detectors 38a, 38b, e.g. due to movements of the elevator car 10.

While a typical (laser) beam of radiation 30b, 30a has a cross-sectional area of approximately 2 mm², i.e. a diameter D0 of less than 1 mm, the diffusers 40a, 40b may be configured for diffusing the beams of radiation 30b, 30a into spots of radiation 42b, 42a having a diameter D_{b}, Dₐ between 10 cm and 30 cm, respectively (see Figs. 4 and 6).

When the distance between the mobile device 20a and the stationary device 20b is large, a tilting motion of the elevator car 10 results in a larger deviation of the beam of radiation 30a emitted from the mobile emitter 34a than a linear motion. Further, a tilting motion of the elevator car 10 effects the deviation of the beam of radiation 30a emitted from the mobile emitter 34a more than the deviation of the beam of radiation 30b emitted from the stationary emitter 34b.

Thus, the stationary diffuser 40b of the stationary device 20b may be configured for generating a spot of radiation 42b having a relatively large diameter D_{b}, e.g. a diameter D_{b} of 20 cm to 30 cm, whereas a spot of radiation 42a having a smaller diameter Dₐ, e.g. a diameter Dₐ of approximately 10 cm, might be sufficient for reliably detecting the beam of radiation 30b emitted by the stationary emitter 34b, which is fixed to the top of the hoistway 4 and therefore does neither move nor tilt.

The diffusers 40a, 40b may comprise frosted glass, which is also known as translucent glass or opaque glass, for diffusing the beams of radiation 30a, 30b. Alternatively, the diffusers 40a, 40b may comprise a combination of half-reflecting and roughened surfaces arranged in a configuration diffusing the beams of radiation 30a, 30b.

When the elevator car 10 tilts, in particular in case of large distances d between the mobile device 20a and the stationary device 20b as it may occur in long hoistways 4, diffusing the beam of radiation 30a traveling from the mobile device 20a to the stationary device 20b may not be sufficient for compensating for the deviation from the target. I.e. despite being diffused, the beam of radiation 30a emitted by the mobile emitter 34a may miss all stationary detectors 38b. This risk increases with the distance d between the mobile device 20a and the stationary device 20b as for a given tilting angle of the mobile emitter 34a, the deviation in the horizontal direction is proportional to said distance d.

In order to reduce or even eliminate deviations caused by tilting motions of the elevator car 10, the mobile device 20a or at least the mobile emitter 34a may be mounted to the elevator car 10 in a configuration in which it is movable with respect to the elevator car 10. The mobile device 20a or the mobile emitter 34a in particular may be mounted to the elevator car 10 via a suspension 21 (see Figure 2), such as a cardanic suspension, allowing the at least one mobile emitter 34a to stay in a vertical orientation, i.e. in an orientation in which the beam of radiation 30a is emitted by the mobile emitter 34a in a vertical direction, even in case the elevator car 10 is tilted. The mobile device 20a and/or the at least the mobile emitter 34a may be provided with a weight 46 constantly causing a vertical orientation of the at least one mobile emitter 34a due to forces of gravity acting onto the weight 46.

Alternatively, the suspension 21 may include actuators 48, such as piezo-actuators 48, which allow actively adjusting the orientation of the at least one mobile emitter 34a with respect to the elevator car 10.

In a configuration including actuators 48, the position of the spot of radiation 42a generated by the beam of radiation 30a emitted from the mobile source of radiation 36a on the array of stationary detectors 38b may be determined; i.e. it may be determined which of the stationary detectors 38b detect(s) at least a portion of the spot of radiation 42a.

When the determined position of the spot of radiation 42a approaches the outer periphery of the array of stationary detectors 38b, a controller 50 connected to or formed integrally with the stationary device 20b may supply control signals to the mobile device 20a, in particular via the other beam of radiation 30b, for controlling the actuators 48. The control signals are configured for causing the actuators 48 to tilt the mobile device 20a or at least the mobile emitter 34a with respect to the elevator car 10 so that the spot of radiation 42a is moved towards the center of the array of stationary detectors 38b. Such a control prevents the spot of radiation 42a from moving beyond the outer periphery of the array of stationary detectors 38b, where it cannot be detected anymore.

With such a configuration even large deviations of the beam of radiation 30a emitted from the mobile source of radiation 36a resulting from large tilting motions and/or from a large distance d between the mobile device 20a and the stationary device 20b may be compensated in order to ensure a reliable and continuous data transmission.

While the invention has been described with reference to exemplary embodiments, it will be understood by those skilled in the art that various changes may be made and equivalents may be substituted for elements thereof without departing from the scope of the invention. In addition, many modifications may be made to adopt a particular situation or material to the teachings of the invention without departing from the essential scope thereof. Therefore, it is intended that the invention shall not be limited to the particular embodiment disclosed, but that the invention includes all embodiments falling within the scope of the dependent claims.

### References

- 2: elevator system
- 3: tension member
- 4: hoistway
- 4a: bottom of the hoistway
- 4b: top of the hoistway
- 5: drive unit
- 6: elevator car
- 7a: landing control panel
- 7b: elevator car control panel
- 8: landing
- 9: sidewall of the elevator car
- 10: elevator control
- 11: landing door
- 12: elevator car door
- 14: car guide member
- 15: counterweight guide member
- 18: position sensor
- 19: counterweight
- 20a: mobile device
- 20b: stationary device
- 21: suspension
- 24: gateway or router
- 26: WLAN access point
- 28a, 28b: circuit board
- 30a, 30b: beam of radiation
- 32a: mobile receiver
- 32b: stationary receiver
- 34a: mobile emitter
- 34b: stationary emitter
- 36a: mobile source of radiation
- 36b: stationary source of radiation
- 38a: mobile detector
- 38b: stationary detector
- 40a, 40b: diffuser
- 42a, 42b: spot of radiation
- 44: electronic device
- 46: weight
- 48: actuator
- 50: controller
- 52: passenger

- d: distance between the mobile device and the stationary device
- D₀: diameter of the beam of radiation
- Dₐ, D_{b}: diameter of a spot of radiation

## Claims

1. Elevator system (2) comprising:
at least one elevator car (10) configured for traveling within a hoistway (4) between a plurality of landings (10); and
an optical data transmission system configured for optically transmitting data between a stationary device (20b) and a mobile device (20a) provided at the at least one elevator car (10);
wherein the optical data transmission system comprises:
at least one emitter (34a, 34b) assigned to any of the stationary device (20b) and the mobile device (20a); and
at least one receiver (32b, 32a) assigned to the other one of the stationary device (20b) and the mobile device (20a);
wherein the at least one emitter (34a, 34b) comprises at least one source of radiation (36a, 36b) configured for emitting a beam of radiation (30a, 30b) towards the at least one receiver (32b, 32a); and
wherein the at least one receiver (32b, 32a) comprises
at least one detector (38b, 38a) configured for detecting the beam of radiation (30a, 30b) emitted by the at least one emitter (34a, 34b); and
a diffuser (40b, 40a) arranged at the side of the at least one detector (38b, 38a) facing the at least one emitter (34a, 34b) and being configured for diffusing the beam of radiation (30a, 30b) emitted by the lat least one emitter (34a, 34b) so that diffused radiation from the beam of radiation (30a, 30b) reaches the at least one detector (38b, 38a).

2. Elevator system (2) according to claim 1, wherein the source of radiation (36a, 36b) is a laser source of radiation (36a, 36b) emitting a laser beam.

3. Elevator system (2) according to claim 1 or 2, the at least one receiver (32b, 32a) comprising a plurality of detectors (38b, 38a) forming an array of detectors.

4. Elevator system (2) according to any of the preceding claims, wherein the diffuser (40b, 40a) comprises frosted glass.

5. Elevator system (2) according to any of the preceding claims, wherein the diffuser (40b, 40a) comprises a combination of rough and/or half-reflecting surfaces.

6. Elevator system (2) according to any of the preceding claims, wherein the beam of radiation (30a, 30b), before being diffused, has a cross-sectional area of 1 mm² to 3 mm², in particular a cross-sectional area of 2 mm².

7. Elevator system (2) according to any of the preceding claims, wherein the diffuser (40b, 40a) is configured for diffusing the beam of radiation (30a, 30b) into a spot of radiation (42a, 42b) having a diameter (Dₐ, D_{b}) of 10 cm to 30 cm.

8. Elevator system (2) according to any of the preceding claims, wherein the radiation of the beam of radiation (30a, 30b) includes visible light and/or infrared light, in particular near infrared light.

9. Elevator system (2) according to any of the preceding claims, wherein the
at least one emitter (34a, 34b) is movably supported by a suspension (21), in particular a cardanic suspension (21), which allows orienting the beam of radiation (30a, 30b) in a vertical direction.

10. Elevator system (2) according to claim 9, comprising a weight (46) configured for orienting the beam of radiation (30a, 30b) in a vertical direction.

11. Elevator system (2) according to claim 9 comprising at least one actuator (48) configured for adjusting the orientation of the at least one emitter (34a, 34b), wherein the at least one actuator (48) in particular is a piezo-actuator.

12. Elevator system (2) according to claim 11 comprising a controller (50) configured for controlling the at least one actuator (48) for adjusting the orientation of the at least one emitter (34a, 34b).

13. Elevator system (2) according to claim 12, wherein the controller (50) is configured for adjusting the orientation of the at least one emitter (34a, 34b) based on signals received from the at least one receiver (32b, 32a).

14. Elevator system (2) according to any of the preceding claims, wherein the optical data transmission system comprises:
a stationary emitter (34b) being part of the stationary device (20b),
a mobile receiver (32a) being part of the mobile device (20a) and configured for detecting radiation (30b) emitted by the stationary emitter (34b);
a mobile emitter (34a) being part of the mobile device (20a), and
a stationary receiver (32b) being part of the stationary device (20b) and configured for detecting radiation (30a) emitted by the mobile emitter (34a).

15. Elevator system (2) according to any of the preceding claims, wherein the stationary device (20b) is connected to the Internet and/or the mobile device (20a) comprises, or is connected with, a wireless local area network access point (26).
